# EUROPÄISCHE PATENTANMELDUNG

(11) **EP 1 040 974 A2**
(43) Veröffentlichungstag der Anmeldung: **04.10.2000**
(21) Anmeldenummer: 00106601.8
(22) Anmeldetag: 28.03.2000
(51) Int. Cl.: B60T 8/00

(54) **Vorrichtung zur Beeinflussung einer ersten Fahrzeuggrösse**

(30) Priorität: 31.03.1999 DE 19914725
(71) Anmelder: ROBERT BOSCH GMBH, 70442 Stuttgart (DE)
(72) Erfinder: Stumpp, Hans-Peter, 71706 Markgröningen (DE)

(57) **Zusammenfassung**

Es wird eine Vorrichtung zur Beeinflussung wenigstens einer ersten Fahrzeuggröße, die eine erste Fahrzeugbewegung oder ein erstes Fahrzeugverhalten beschreibt vorgestellt. Diese Vorrichtung enthält Mittel zur Fehlererkennung oder Funktionsüberwachung, die ein Speichermittel aufweisen, in dem erste Daten, die in den Mitteln zur Fehlererkennung oder Funktionsüberwachung erzeugt werden, gespeichert werden. Das Fahrzeug enthält weitere Vorrichtungen, mit denen zumindest weitere Fahrzeuggrößen beeinflußbar sind. In dem Speichermittel werden ferner zweite Daten, die jeweils zu früheren Zeitpunkten vorliegen, fortlaufend gespeichert und dann, wenn eine vorgegebene Bedingung erfüllt ist, sukzessive durch zweite Daten, die jeweils zu späteren Zeitpunkten vorliegen, überschrieben, wobei bei Eintreten eines vorbestimmten Ereignisses die im Speichermittel gespeicherten zweiten Daten fest abgespeichert werden. Bei den zweiten Daten handelt es sich um erste Eingangsgrößen, die der Vorrichtung zur Beeinflussung der ersten Fahrzeuggröße zugeführt werden und/oder um zweite Eingangsgrößen, die einer der weiteren Vorrichtungen zugeführt werden, oder um erste Größen, die in der Vorrichtung zur Beeinflussung der ersten Fahrzeuggröße im Rahmen der Beeinflussung der ersten Fahrzeuggröße ermittelt werden und/oder um zweite Größen, die in einer der weiteren Vorrichtungen im Rahmen der Beeinflussung der jeweiligen Fahrzeuggröße ermittelt werden.

## Beschreibung

### Stand der Technik

Die Erfindung betrifft eine Vorrichtung zur Beeinflussung einer ersten Fahrzeuggröße. Solche Vorrichtungen sind aus dem Stand der Technik in vielerlei Modifikationen bekannt.

In der in der Automobiltechnischen Zeitschrift (ATZ) 96, 1994, Heft 11, auf den Seiten 674 bis 689 erschienen Veröffentlichung "FDR - Die Fahrdynamikregelung von Bosch" wird eine Stabilisierungsvorrichtung für Personenkraftwagen beschrieben. Bei dieser Stabilisierungsvorrichtung werden bei der Regelung der Schwimmwinkel und die Gierrate des Fahrzeuges geregelt. Hierzu wird jeweils eine Regelabweichung zwischen den Istwerten und den Sollwerten für den Schwimmwinkel und die Gierrate ermittelt. In Abhängigkeit dieser Regelabweichungen werden Motoreingriffe und/oder Bremseneingriffe zur Stabilisierung des Fahrzeuges durchgeführt.

Diese Vorrichtung ist mit Mitteln zur Fehlererkennung oder Funktionsüberwachung ausgestattet. Mit diesen Mitteln werden beispielsweise die zu der Vorrichtung gehörende Sensorik oder die im Fahrzeug enthaltene Hydraulik oder aber verschiedene elektrische Verbindungsleitungen auf Leitungsbruch hin überwacht.

Der in der Veröffentlichung "FDR - Die Fahrdynamikregelung von Bosch" beschriebenen Stabilisierungsvorrichtung werden verschiedene Größen als Eingangsgrößen zugeführt. Außerdem werden in ihr eine große Anzahl von Größen im Rahmen der durchgeführten Regelung erzeugt.

Mit Blick auf eine Dokumentation von Meßdaten und von im Rahmen der Regelung erzeugten Daten für eine Ereignisrekonstruktion, beispielsweise bei einem Unfall, wäre es wünschenswert, diese Daten in geeigneter Weise dauerhaft zu speichern. Somit können diese Daten nach dem eingetreten Ereignis ausgewertet werden und beispielsweise bei einem Unfall zur Klärung der Schuldfrage beitragen.

Entsprechende Vorrichtungen zur Dokumentation von Daten in einem Kraftfahrzeug sind aus dem Stand der Technik bekannt. So ist beispielsweise der DE 195 09 711 A1 ein in einem Kraftfahrzeug angeordneter Unfalldatenschreiber zu entnehmen. Mit Hilfe dieses Unfalldatenschreibers werden Daten gespeichert, die ein Unfallgeschehen charakterisieren. Zu diesem Zweck ist der Datenspeicher als Ringspeicher ausgebildet. Zur Auslösung der dauerhaften Datenspeicherung werden die Signale von Beschleunigungssensoren überwacht. Bei diesem Unfalldatenschreiber handelt es sich um ein zusätzlich in das Fahrzeug eingefügtes Gerät, welches ausschließlich zu diesem Zweck eingefügt wird. D.h. der Unfalldatenschreiber wird ausschließlich zur Speicherung der Daten verwendet. Es ist beispielsweise nicht möglich, mit ihm eine Fahrzeuggröße zu beeinflussen.

Aus der EP 0 671 631 A2 ist eine Anordnung zur Speicherung von Daten in einem Kraftfahrzeug bekannt. Diese Daten enthalten statische Angaben zum Kraftfahrzeug und zum Halter, Angaben von Fehlercodes über den Zustand von Systemen, Komponenten und Sensoren an Bord des Kraftfahrzeuges. Die Fehlercodes, die durch eine Fehlerdiagnosevorrichtung an Bord des Kraftfahrzeuges gewonnen werden, werden auf einer sogenannten Smartcard, die in einer entsprechenden Auf zeichnungseinheit eingesetzt ist, aufgezeichnet. Diese Anordnung hat den Nachteil, daß für die Aufzeichnung der Daten ein ansonsten in Kraftfahrzeugen nicht verwendetes Speichermedium eingesetzt wird. In diesem Fall ist ein erheblicher Aufwand erforderlich, dieses Speichermedium an die im Fahrzeug verwendeten Steuervorrichtungen anzubinden. Es kann beispielsweise nicht ohne weiteres in bestehende Regelungsvorrichtungen integriert werden.

Aus der DE 195 46 815 A1 ist ein Steuersystem mit Datenspeicherung bekannt. Bei dem Steuersystem handelt es sich um eine Motorsteuereinheit, die eine Speichereinheit enthält. In dieser Speichereinheit werden Daten, die der Motorsteuereinheit, ausgehend von der ihr zugeordneten Sensorik zugeführt werden, abgespeichert. Neben der Motorsteuereinheit ist das Fahrzeug auch ferner mit einer Bremsschlupfregelung ausgestattet. Über einen Bus werden ausgehend von der Bremsschlupfregelung verschiedenen Daten der in der Motorsteuereinheit befindlichen Speichereinheit zugeführt. Bei diesen Daten handelt es sich zum einen um Daten, die von der der Bremsschlupfregelung zugeordneten Sensorik erzeugt und zum anderen in der Bremsschlupfregelung im Rahmen der in ihr stattfindenden Regelung erzeugt werden.

Vor diesem Hintergrund besteht die Aufgabe der vorliegenden Erfindung darin, eine Vorrichtung zur Beeinflussung wenigstens einer ersten Fahrzeuggröße bereitzustellen, mit der Daten dieser Vorrichtung und weiterer im Fahrzeug angeordneter Vorrichtungen, mit denen zumindest weitere Fahrzeuggrößen beeinflußbar sind, speicherbar sind, ohne daß dabei ein großer konstruktiver Aufwand oder ein großer Aufwand an zusätzlichen Bauelementen bei der Realisierung dieser Speicherfunktion an der Vorrichtung zur Beeinflussung der ersten Fahrzeuggröße erforderlich sind.

Diese Aufgabe wird durch die Merkmale des Anspruchs 1 gelöst.

### Vorteile der Erfindung

Zur Lösung der Aufgabe wird erfindungsgemäß eine Vorrichtung zur Beeinflussung wenigstens einer ersten Fahrzeuggröße, die eine erste Fahrzeugbewegung oder ein erstes Fahrzeugverhalten beschreibt, vorgeschlagen, die Mittel zur Fehlererkennung oder Funktionsüberwachung enthält. Diese Mittel wiederum weisen ein Speichermittel auf, in dem erste Daten, die in ihnen zur Fehlererkennung oder Funktionsüberwachung erzeugt werden, gespeichert werden. Das Fahrzeug enthält weitere Vorrichtungen, mit denen zumindest weitere Fahrzeuggrößen beeinflußbar sind.

In dem Speichermittel werden ferner zweite Daten, die jeweils zu früheren Zeitpunkten vorliegen, fortlaufend gespeichert und dann, wenn eine vorgegebene Bedingung erfüllt ist, sukzessive durch zweite Daten, die jeweils zu späteren Zeitpunkten vorliegen, überschrieben. Bei Eintreten eines vorbestimmten Ereignisses werden die im Speichermittel gespeicherten zweiten Daten fest abgespeichert. Bei den zweiten Daten handelt es sich um erste Eingangsgrößen handelt, die der Vorrichtung zur Beeinflussung der ersten Fahrzeuggröße zugeführt werden und/oder um zweite Eingangsgrößen, die einer der weiteren Vorrichtungen zugeführt werden, oder um erste Größen, die in der Vorrichtung zur Beeinflussung der ersten Fahrzeuggröße im Rahmen der Beeinflussung der ersten Fahrzeuggröße ermittelt werden und/oder um zweite Größen, die in einer der weiteren Vorrichtungen im Rahmen der Beeinflussung der jeweiligen Fahrzeuggröße ermittelt werden.

Die Art der Speicherung der zweiten Daten entspricht zunächst einer flüchtigen Speicherung der Daten. Bei Eintreten eines vorbestimmten Ereignisses werden die im Speichermittel gespeicherten Daten dann fest, d.h. nicht flüchtig abgespeichert.

Durch die Verwendung eines Speichermittels, welches Bestandteil eines in der Vorrichtung zur Beeinflussung der ersten Fahrzeuggröße bereits enthaltenen Mittels zur Fehlererkennung oder Funktionsüberwachung ist, ist der Einbau eines ansonsten erforderlichen separaten Speichermittels nicht erforderlich. D.h. es sind an dieser Vorrichtung, bei der es sich im Normalfall um ein Steuergerät handelt, welches Platinen enthält, keine konstruktiven Änderungen bzw. Änderungen im Layout erforderlich. Für gewöhnlich kann das bereits vorhanden Speichermittel verwendet werden. Unter Umständen muß das bisher in dem Mittel zur Fehlererkennung oder Funktionsüberwachung verwendete Speichermittel gegen ein Speichermittel mit einer größeren Speicherkapazität ausgetauscht werden. Es sind lediglich Änderungen in der Organisation der Speicherung in dem Speichermittel erforderlich, die sich mit einem kleinen Aufwand erledigen lassen. D.h. bei der erfindungsgemäß vorgeschlagenen Lösung handelt es sich um eine kostengünstige Lösung, die sich mit geringem Aufwand umsetzen läßt.

Da eine Vorrichtung, in diesem Fall die Vorrichtung, mit der die erste Fahrzeuggröße beeinflußt wird, mit dem Speichermittel ausgestattet ist, ist es nicht erforderlich, daß die anderen in dem Fahrzeug enthaltenen Vorrichtungen ebenfalls mit einem Speichermittel zur Speicherung der Daten ausgestattet werden müssen.

Da die einzelnen Vorrichtungen für gewöhnlich mit einem Busssystem, beispielsweise einem CAN-Bus, untereinander verbunden sind, ist die Übertragung der Daten von den weiteren im Fahrzeug enthaltenen Vorrichtungen an die Vorrichtung zur Beeinflussung der ersten Fahrzeuggröße ohne großen Aufwand möglich. Durch die zentralisierte Abspeicherung der Daten wird auch die weitere Verarbeitung bzw. Auswertung der Daten vereinfacht.

Dadurch daß das Speichermittel in der Vorrichtung zur Beeinflussung der ersten Fahrzeuggröße enthalten ist, entfällt die nachträgliche Anbringung eines gesonderten Unfalldatenschreibers, was ebenfalls mit wesentlich geringeren Kosten für den Halter des Fahrzeuges verbunden ist.

Vorteilhafterweise handelt es sich bei der Vorrichtung zur Beeinflussung der ersten Fahrzeuggröße um eine Vorrichtung zur Regelung einer die Gierrate eines Fahrzeuges beschreibenden Größe. Die ersten Eingangsgrößen, die solch einer Vorrichtung zugeführt werden, setzten sich beispielsweise aus einer die Querbeschleunigung des Fahrzeuges beschreibende Größe und/oder aus einer den am Fahrzeug eingestellten Lenkwinkel beschreibenden Größe und/oder aus einer die Gierrate des Fahrzeuges beschreibenden Größe und/oder aus einer den vom Fahrer eingestellten Vordruck beschreibenden Größe und/oder aus Größen, die die Raddrehzahlen der einzelnen Räder beschreiben, zusammen.

Bei solch einer Vorrichtung werden im Rahmen der Beeinflussung der ersten Fahrzeuggröße beispielsweise der Schwimmwinkel des Fahrzeuges, der Reifenschräglaufwinkel für die einzelnen Räder, die Fahrzeuggeschwindigkeit, die Fahrzeugquergeschwindigkeit, die Fahrzeuglängsbeschleunigung, die an den Rädern angreifenden Kräfte sowie weitere Größen ermittelt.

Bei diesen Größen handelt es sich um die vorstehend beschriebenen ersten Größen, die Teil der zweiten Daten sind.

Ebenso vorteilhaft ist es, wenn es sich bei der Vorrichtung zur Beeinflussung der ersten Fahrzeuggröße uni eine Bremsschlupfregelung oder um eine Antriebsschlupfregelung handelt, mit der der Bremsschlupf oder der Antriebsschlupf beeinflußt wird. In diesem Fall handelt es sich bei den ersten Eingangsgrößen um Größen, die die Raddrehzahlen der einzelnen Räder beschreiben.

Vorteilhafterweise ist die vorgegebene Bedingung dann erfüllt, wenn der Speicherplatz des Speichermittels vollständig oder zu einem gewissen Prozentsatz belegt ist. Wie unschwer zu erkennen ist, hängt diese Bedingung zum einen vom Speicherplatz, den das Speichermittel zur Verfügung stellt bzw. von der Datenmenge, die zu jedem Zeitpunkt abgespeichert werden soll, ab. Wenn der Speicherplatz vollständig belegt ist, ist eine Abspeicherung von Daten nach Eintreten des vorbestimmten Ereignisses nicht mehr möglich. Demgegenüber hat die andere Bedingung, die dann erfüllt ist, wenn der Speicherplatz zu einem gewissen Prozentsatz belegt ist, den entscheiden Vorteil, daß nach Eintreten des vorbestimmten Ereignisses aufgrund des noch freien Speicherplatzes immer noch Daten abgespeichert werden können. Durch Adaption des Prozentsatzes kann die Datenmenge, die nach Eintreten des vorbestimmten Ereignisses noch abgespeichert werden soll, festgelegt werden.

Bei dem Speichermittel handelt es sich vorteilhafterweise um einen Ringspeicher, d.h. das Speichermittel ist als Ringspeicher aufgebaut bzw. organisiert bzw. wird entsprechend adressiert. Ein Ringspeicher hat den Vorteil, daß die Daten in ihm rollierend gespeichert werden. Mit anderen Worten: Solange der Speicher beispielsweise noch nicht ganz voll geschrieben ist, werden Daten in ihm abgelegt. Sobald der Speicher voll geschrieben ist, werden die zuerst in ihm abgelegten Daten durch die neusten Daten überschrieben. Durch diese Vorgehensweise werden alte Daten sukzessive durch neuere Daten ersetzt. Wobei die ältesten Daten immer zuerst ersetzt werden.

Vorteilhafterweise enthält die Vorrichtung ein Ausgabemittel, mit dem die im Speichermittel enthaltenen Daten an ein externes Auswertemittel übertragen werden. Somit ist beispielsweise die Auswertung der in dem Speichermittel abgespeicherten Daten ohne großen Aufwand jederzeit möglich.

Bei dem vorbestimmten Ereignis, bei dessen Eintreten die im Speichermittel gespeicherten Daten fest abgespeichert werden, d.h. nicht flüchtig abgespeichert werden, handelt es sich vorteilhafterweise um einen Unfall oder um einen Stillstand des Fahrzeuges. Insbesondere im Falle eines Unfalls ist es von Vorteil, wenn beispielsweise zur Klärung der Schuldfrage Daten vorliegen, die eine Rekonstruktion der Fahrzeugbewegung oder des Fahrerverhaltens zulassen. Durch die nicht flüchtige Abspeicherung der Daten wird sichergestellt, daß die bereits im Speichermittel befindlichen Daten nicht mehr durch neuere Daten überschrieben werden, d.h. die bereits im Speichermittel befindlichen Daten werden 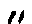 eingefroren".

Ferner ergibt sich ein weiterer Vorteil daraus, daß in dem Speichermittel auch Daten abgespeichert werden, die die Betriebsdauer einzelner Vorrichtungen oder einzelner Komponenten beschreiben. Somit ist für diese Vorrichtungen oder Komponenten die Dauer, während der sie in Betrieb waren bekannt. Ausgehend von dieser Information kann beispielsweise mit Blick auf die Wiederverwertung dieser Vorrichtungen bzw. Komponenten entschieden werden - dabei wird vorausgesetzt, daß die maximal zulässige Betriebszeit noch nicht überschritten ist -, ob sie sich als Ersatzteil oder Tauschteil eignen.

Bei den weiteren Vorrichtungen handelt es vorteilhafterweise um eine Getriebesteuerung und/oder um eine Geschwindigkeitsregelvorrichtung und/oder um eine Abstandsregelvorrichtung und/oder um Rückhaltesysteme und/oder um eine Motorsteuerung und/oder um eine Fahrwerkregelung und/oder um eine Lenkvorrichtung. Von besonderem Nutzen sind die Daten, die von einer Geschwindigkeitsregelvorrichtung, die Fahrzeuggeschwindigkeit, oder von einer Abstandsregelvorrichtung, der Abstand zu vorfahrenden Fahrzeugen, bereitgestellt werden. Bei den weiteren Vorrichtungen kann es sich allgemein auch um Komfortsysteme oder um Sicherheitssysteme handeln.

Bei den diesen Vorrichtungen jeweils zugeführten Größen handelt es sich jeweils um zweite Eingangsgrößen. Größen, die in einer der weiteren Vorrichtungen im Rahmen der Beeinflussung der jeweiligen Fahrzeuggröße ermittelt werden, werden jeweils als zweite Größen bezeichnet.

Von Vorteil ist es auch, wenn die ersten Daten, die jeweils zu früheren Zeitpunkten vorliegen, ebenfalls fortlaufend gespeichert werden und dann, wenn eine vorgegebene Bedingung erfüllt ist, sukzessive durch erste Daten, die jeweils zu späteren Zeitpunkten vorliegen, überschrieben werden, wobei bei Eintreten des vorbestimmten Ereignisses die im Speichermittel gespeicherten ersten Daten fest abgespeichert werden.

Weitere Vorteile sowie vorteilhafte Ausgestaltungen können den Unteransprüchen, wobei auch eine beliebige Kombination der Unteransprüche denkbar ist, der Zeichnung sowie der Beschreibung des Ausführungsbeispiels entnommen werden.

### Zeichnung

Die Zeichnung besteht aus den Figuren 1 bis 3. In Figur 1 ist die Verknüpfung mehrerer in einem Fahrzeug enthaltener Vorrichtungen, mit denen jeweils eine Fahrzeuggröße beeinflußbar ist, dargestellt. In Figur 2 ist die erfindungsgemäße Vorrichtung zur Beeinflussung wenigstens einer ersten Fahrzeuggröße dargestellt. Figur 3 zeigt in Form eines Flußdiagramms den Ablauf des in der erfindungsgemäßen Vorrichtung ablaufenden Verfahrens.

### Ausführungsbeispiel

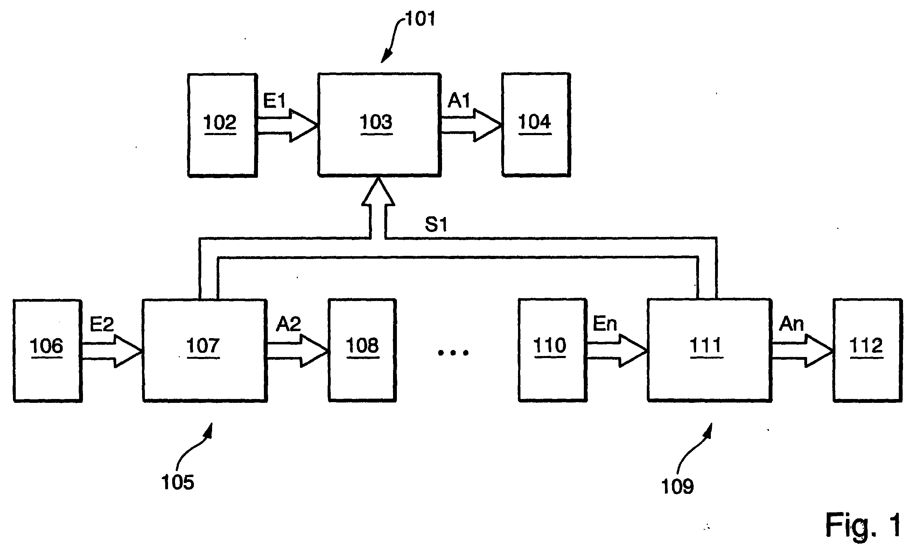

In Figur 1 ist mit 101 eine Vorrichtung zur Beeinflussung wenigstens einer ersten Fahrzeuggröße, die eine erste Fahrzeugbewegung oder ein erstes Fahrzeugverhalten beschreibt, dargestellt. Bei der Vorrichtung 101 soll es sich im vorliegenden Ausführungsbeispiel um eine Regelung handeln, mit der als erste Fahrzeuggröße eine die Gierrate des Fahrzeuges beschreibende Größe geregelt wird. Zu diesem Zweck umfaßt die Vorrichtung 101 ein Reglermittel 103, in dem das der Regelung zugrundeliegende Regelkonzept abgelegt ist. Im vorliegenden Fall soll es sich um ein Regelkonzept handeln, welches der Regelung der Gierrate eines Fahrzeuge zugrunde liegt. An dieser Stelle wird auf die im Kapitel Stand der Technik aufgeführte Veröffentlichung 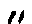 FDR - Die Fahrdynamikregelung von Bosch" verwiesen.

Neben den Reglermitteln 103 sind der Vorrichtung 101 Sensormittel 102 zugeordnet. Die Mit Hilfe dieser Sensormittel erfaßten Größen E1 werden dem Reglermittel 103 zugeführt. Die Größen E1 werden als erste Eingangsgrößen bezeichnet und sind Teil der bereits oben beschriebenen zweiten Daten. Im Rahmen einer Gierratenregelung handelt es sich bei den Sensormitteln beispielsweise um einen Querbeschleunigungssensor, um einen Gierratensensor, um einen Lenkwinkelsensor, um Raddrehzahlsensoren sowie um einen Vordrucksensor. Folglich sind in den ersten Eingangsgrößen zumindest die Querbeschleunigung, die Gierrate, der Lenkwinkel, die Raddrehzahlen sowie der Vordruck enthalten. Ferner sind der Vorrichtung 101 Aktuatoren 104 zugeordnet, die entsprechend der in den Reglermitteln 103 erzeugten Größen oder Signale A1 zur Regelung der Gierrate angesteuert werden. Bei den Aktuatoren kann es sich beispielsweise uni den Rädern zugeordnete Bremsen oder um Mittel zur Beeinflussung des vom Motor abgegebenen Motormomentes handeln.

Figur 1 sind weitere Vorrichtungen 105 bzw. 109 zu entnehmen, die ebenfalls in dem Fahrzeug angeordnet sind, und mit denen zumindest weitere Fahrzeuggrößen beeinflußbar sind. Diese weiteren Vorrichtungen sind entsprechend der Vorrichtung 101 aufgebaut. So umfaßt die Vorrichtung 105 Sensormittel 106, Reglermittel 107 sowie Aktuatoren 108. Die mit Hilfe der Sensormittel 106 erfaßten Größen E2, die Teil der zweiten Eingangsgrößen sind, werden den Reglermitteln 107 zugeführt. Die mit Hilfe der Reglermittel gemäß dem in ihnen abgelegten Regelkonzept erzeugten Größen oder Signale A2, werden den Aktuatoren 108 zugeführt.

Die Vorrichtung 109 umfaßt Sensormittel 110, Reglermittel 111 sowie Aktuatoren 112. Die mit Hilfe der Sensormittel 110 erfaßten Größen En, die ebenfalls Teil der zweiten Eingangsgrößen sind, werden den Reglermitteln 111 zugeführt. Die mit Hilfe der Reglermittel gemäß dem in ihnen abgelegten Regelkonzept erzeugten Größen oder Signale An, werden den Aktuatoren 112 zugeführt. Durch die drei Punkte zwischen der Vorrichtung 105 und der Vorrichtung 109 ist in Figur 1 angedeutet, daß es sich um mehr als zwei weitere Vorrichtungen handeln kann.

Ausgehend von der Vorrichtung 105 und ausgehend von der Vorrichtung 109 werden der Vorrichtung 101 Daten zugeführt. Genauer gesagt werden dies Daten von den Reglermitteln 107 bzw. 111 ausgegeben und den Reglermitteln 103 zugeführt. Diese Daten sind in Figur 1 zu S1 zusammengefaßt. Bei den Daten S1 handelt es sich um die zweiten Eingangsgrößen E2, die den Reglermitteln 107 zugeführt werden und um die zweiten Eingangsgrößen En, die dem Reglermitteln 111 zugeführt werden. Alternativ bzw. ergänzend handelt es sich um zweite Größen, die in der jeweiligen weiteren Vorrichtungen, insbesondere in den entsprechenden Reglermitteln, im Rahmen der Beeinflussung der jeweiligen Fahrzeuggröße, ermittelt werden.

Bei der Vorrichtung 101 kann es sich alternativ um eine Bremsschlupfregelung oder um eine Antriebsschlupfregelung handeln, mit der der Bremsschlupf oder der Antriebsschlupf beeinflußt wird.

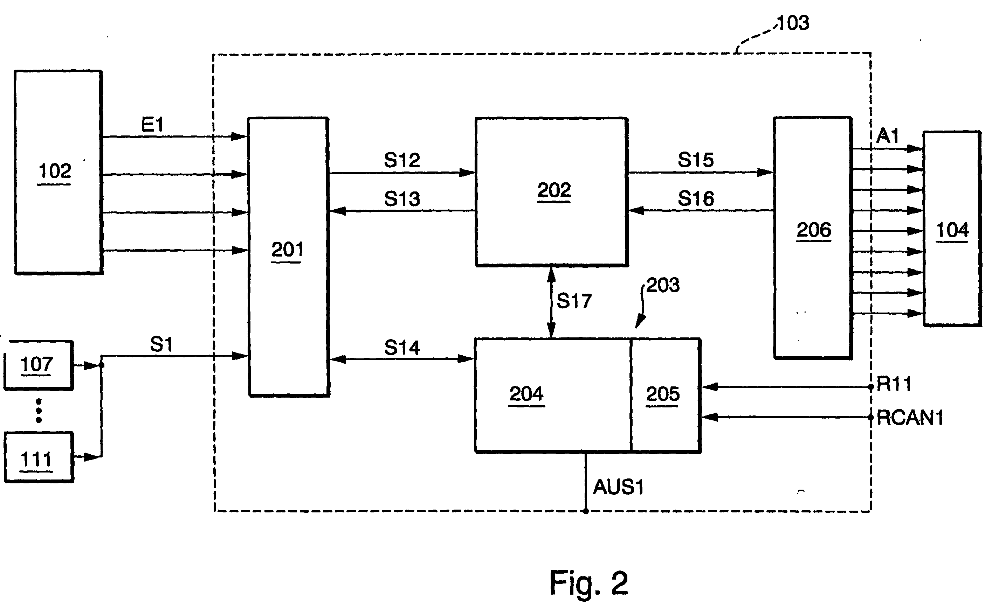

In Figur 2 ist das in der Vorrichtung 101 enthaltene Reglermittel 103 in detaillierter Form dargestellt. Die mit Hilfe der Sensormittel 102 erfaßten Größen E1 werden einem Mittel 201 zur Aufbereitung der Eingangssignale zugeführt. In entsprechender Weise werden auch die Größen S1, die von den in den Vorrichtungen 105 und 109 enthaltenen Reglermitteln 107 und 111 ausgegeben werden, dem Mittel 201 zugeführt. Alternativ können die Größen S1 auch direkt dem noch zu beschreibenden Mittel 203 zugeführt werden. Bei dem Mittel 201 handelt es sich uni ein Mittel, mit dem die Größen E1 bzw. S1 so aufbereitet werden, daß sie in dem Reglermittel 103 verarbeitet werden können. Beispielsweise handelt es sich hierbei um Filtermittel, mit denen Störungen ausgefiltert werden oder um A/D-Wandler.

Die in dem Mittel 201 aufbereiteten Größen E1 bzw. S1 werden einem Reglerkern 202 in Form der Größen S12 und einem Mittel 203 in Form von Größen S14 zugeführt. Durch die Verwendung von zwei verschiedenen Bezeichnungen soll angedeutet werden, daß die diesen Mitteln zugeführten Größen nicht identisch zu sein brauchen. Dies soll allerdings nicht die Möglichkeit ausschließen, daß sie u.U. doch identisch sind. In erster Linie handelt es sich bei den Größen S12 um die Größen, die im Reglerkern 202 zur Durchführung der Regelung der ersten Fahrzeuggröße, im vorliegenden Ausführungsbeispiel der Gierrate, erforderlich sind. Bei den Größen S14 handelt es sich in erster Linie um die aufbereiteten Eingangsgrößen E1 und um die aufbereiteten Größen S1. D.h. die Größen S14 stellen die zweiten Daten dar, die sich aus den ersten Eingangsgrößen E1 und den zweiten Eingangsgrößen E2 und En zusammensetzen.

Wie bereits erwähnt wird im Reglerkern 202 entsprechend dem in ihm abgelegten Reglerkonzept die erste Fahrzeuggröße geregelt. Hierzu werden verschiedene Größen ermittelt, die intern im Reglerkern verwendet werden. Diese Größen sind der Übersichtlichkeit halber in Figur 2 nicht dargestellt. Ausgehend von den dem Reglerkern 202 zugeführten Größen S12 und den im Reglerkern erzeugten internen Größen werden Größen S15 ermittelt, die einem Mittel 206 zugeführt werden. Mit Hilfe des Mittels 206 werden die Größen S15 in Ansteuersignale A1 umgesetzt, mit denen die der Vorrichtung 101 zugeordneten Aktuatoren 104 angesteuert werden. Die Größen S15 werden gemäß dem im Reglerkern 202 implementierten Regelkonzept so ermittelt, daß die erste Fahrzeuggröße gemäß diesem Regelkonzept geregelt wird. Im vorliegenden Ausführungsbeispiel handelt es sich bei den Aktuatoren beispielsweise um den einzelnen Rädern des Fahrzeuges zugeordnete Bremsen, dabei kann es sich um hydraulische oder um eine pneumatische oder um eine elektrohydraulische oder um elektropneumatische oder um eine elektrische Bremse handeln. Ferner handelt es sich bei den Aktuatoren auch um Mittel zur Beeinflussung des vom Motor abgegebenen Motormomentes. Im konkreten Fall handelt es sich hierbei beispielsweise um Mittel zur Beeinflussung des Drosselklappenwinkels oder um Mittel zur Beeinflussung des Zündzeitpunktes oder um Mittel zur Beeinflussung der zugeführten Treibstoffmenge.

Neben den Größen A1 werden in dem Mittel 206 auch Größen S16 erzeugt, die dem Reglerkern 202 zugeführt werden. Mit diesen Größen S16 wird dem Reglerkern der Zustand der einzelnen Aktuatoren mitgeteilt. Diese Zustände können bei der Regelung berücksichtigt werden.

Die im Reglerkern 202 erzeugten internen Größen und/oder die Größen S15 werden zusammengefaßt als Größen S17, bei denen es sich um die ersten Größen der zweiten Daten handelt, dem Mittel 203 zugeführt. In den Größen S17 können auch die Größen S16 enthalten sein. Neben den bereits beschriebenen internen Größen und den Größen S15 werden im Reglerkern 202 auch Größen S13 erzeugt, die dem Mittel 201 zugeführt werden. Mit Hilfe dieser Größen S13 kann beispielsweise die in dem Mittel 201 stattfindende Signalaufbereitung beeinflußt werden. So ist beispielsweise eine Beeinflussung der Zeitkonstanten der in dem Mittel 201 enthaltenen Filter denkbar.

Im vorliegenden Ausführungsbeispiel soll es sich bei dem Mittel 203 um ein Mittel zur Fehlererkennung oder Funktionsüberwachung handeln, mit dem Fehler oder Funktionsstörungen zumindest der Vorrichtung 101 und der mit ihr in Verbindung stehenden Komponenten erkennbar sind. Im vorliegenden Ausführungsbeispiel ist das Mittel 203 aus zwei Komponenten 204 und 205 aufgebaut. Die Komponente 205 stellt ein Speichermittel dar, in dem die Größen S14 und S17, d.h. die zweiten Daten, abgespeichert werden. Mit Hilfe der Komponente 204 werden die mit Blick auf die Fehlererkennung durchzuführenden Abfragen durchgeführt. D.h. es werden beispielsweise die einzelnen Sensoren anhand des von ihnen erzeugten Signals auf Plausibilität überprüft. Ebenso kann anhand der Signale S16, die von der Aktuatorik stammen, deren Funktion auf Fehler überprüft werden.

Die bei der Fehlererkennung erzeugten Größen werden als erste Daten bezeichnet. Auch diese Daten werden in dem Speichermittel 205 gespeichert, vorteilhafterweise ebenfalls rollierend.

Gleichzeitig hat die Komponente 204 auch die Funktion eines Ausgabemittels, mit dem die im Speichermittel 205 enthaltenen Daten an ein externes Auswertemittel übertragen werden. Dies ist in Figur 1 durch die Größe AUS1 angedeutet.

Mit Hilfe der Größe R11 kann ein manueller, d.h. beispielsweise ein vom Fahrer des Fahrzeuges gewünschter Reset durchgeführt werden. Durch diesen Reset wird der Inhalt des Speichermittels 205 gelöscht. Mit Hilfe der Größe RCAN1 wird das Speichermittel 205 zum Auslesen der in ihm gespeicherten Daten initialisiert.

Durch die Darstellung mit Doppelpfeilen für die Größen S14 und S17 ist in Figur 2 angedeutet, daß auch Informationen ausgehend von dem Mittel 203 dem Mittel 201 bzw. dem Reglerkern 202 zugeführt werden können.

An dieser Stelle sei bemerkt, daß die in Figur 2 konkret gezeigte Zuführung der Größen S14 bzw. S17 zu dem Mittel 203 keineswegs andeuten soll, daß diese Größen lediglich dem Mittel 204 zugeführt werden. Vielmehr werden die Größen dem Mittel 203 und somit den beiden einzelnen Mitteln 204 und 205 zugeführt

Durch die verwendete Schreibweise S1x für die in Figur 2 dargestellten Größen soll zum Ausdruck gebracht werden, daß es sich bei diesen Größen um Größen handelt, die die Vorrichtung 101 betreffen. Entsprechend dieser Schreibweise würden Größen S5x die Vorrichtung 105 und Größen S9x die Vorrichtung 109 betreffen. D.h. die zweiten Größen der Vorrichtung 105 werden mit S57 und die zweiten Größen der Vorrichtung 109 mit S59 bezeichnet.

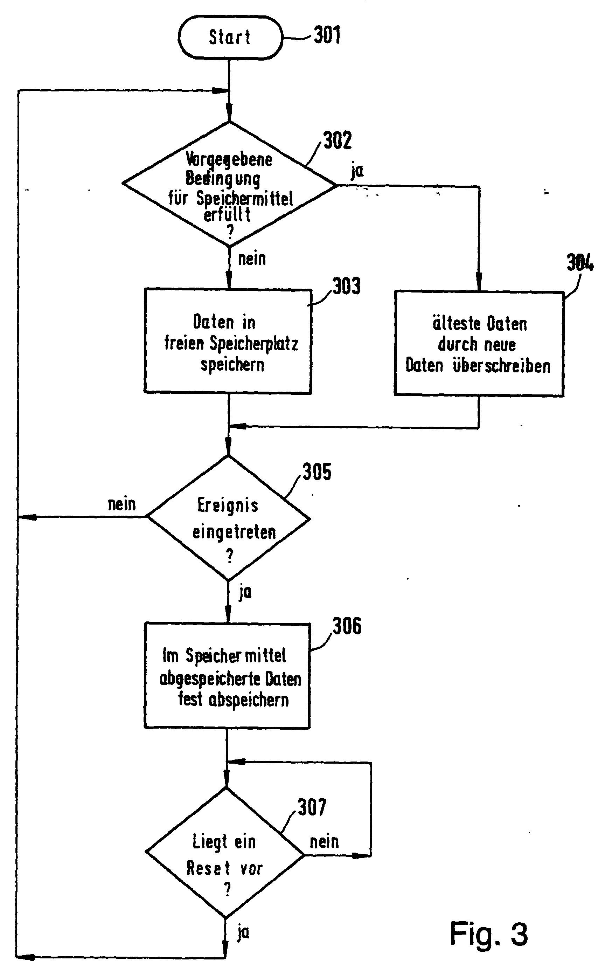

In Figur 3 ist der Ablauf des in der Vorrichtung 101 ablaufenden Verfahrens dargestellt. Das Verfahren beginnt mit einem Schritt 301. Anschließend an den Schritt 301 wird ein Schritt 302 ausgeführt. In diesem Schritt wird überprüft, ob eine vorgegebene Bedingung für das Speichermittel erfüllt ist. Im konkreten Fall wird überprüft, ob der Speicherplatz des Speichermittels vollständig oder zu einem gewissen Prozentsatz belegt ist. Ist dies nicht der Fall, so wird anschließend an den Schritt 302 ein Schritt 303 ausgeführt, in welchem die dem Speichermittel zugeführten Daten S14 und S17 in einem freien Speicherplatz gespeichert werden. Sollen auch die bei der Fehlererkennung erzeugten Daten, d.h. die ersten Daten, abgespeichert werden, so erfolgt dies auch in diesem Schritt. Anschließend an den Schritt 303 wird ein Schritt 305 ausgeführt.

Wird dagegen im Schritt 302 festgestellt, daß die vorgegebene Bedingung für das Speichermittel erfüllt ist, so wird anschließend an den Schritt 302 ein Schritt 304 ausgeführt, in welchem die ältesten Daten, die sich im Speichermittel befinden, durch die neuesten Daten überschrieben werden. Mit anderen Worten: Die jeweils zu früheren Zeitpunkten vorliegenden Daten, die fortlaufend gespeichert wurden, werden nun sukzessive durch Daten, die jeweils zu späteren Zeitpunkten vorliegen, überschrieben. Dies gilt auf jeden Fall für die zweiten Daten und sofern die ersten Daten ebenfalls rollierend abgespeichert werden sollen, ebenso. Anschließend an den Schritt 304 wird ebenfalls der Schritt 305 ausgeführt.

In dem Schritt 305 wird überprüft, ob ein vorbestimmtes Ereignis eingetreten ist. Im konkreten Fall wird überprüft, ob ein Unfall oder ein Stillstand für das Fahrzeug vorliegt. Die Erkennung ob ein Unfall vorliegt kann beispielsweise durch Auswertung der Fahrzeugbeschleunigungen in Längs und/oder in Querrichtung festgestellt werden. Ob ein Fahrzeugstillstand vorliegt kann mit Hilfe der Fahrzeuggeschwindigkeit festgestellt werden. Liegt das vorbestimmte Ereignis nicht vor, so wird anschließend an den Schritt 305 erneut der Schritt 302 ausgeführt, d.h. es werden weiterhin Daten in das Speichermittel eingeschrieben bzw. gespeichert. Liegt dagegen das vorbestimmte Ereignis vor, so wird anschließend an den Schritt 305 ein Schritt 306 ausgeführt.

Im Schritt 306 werden die im Speichermittel 205 sich befindenden Daten fest, d.h. nicht flüchtig abgespeichert. Mit anderen Worten: Die Daten werden eingefroren, sei bleiben erhalten, es werden keine älteren Daten mehr durch jüngere überschrieben.

An dieser Stelle sei auf folgendes hingewiesen: Im Zusammenhang mit Schritt 302 wurden zwei Bedingungen für das Speichermittel 205 vorgestellt. Zum einen die Bedingung, bei der ermittelt wird, ob der Speicherplatz des Speichermittels 205 vollständig belegt ist. Liegt diese Bedingung der im Schritt 302 stattfindenden Abfrage zugrunde, so können nach der Feststellung im Schritt 305, daß das vorbestimmte Ereignis eingetreten ist, keine Daten mehr im Speichermittel 205 gespeichert werden, da kein Speicherplatz mehr zur Verfügung steht. Zum anderen kann im Schritt 302 die Bedingung ausgewertet werden, bei der abgefragt wird, ob der Speicherplatz des Speichermittels 205 zu einem gewissen Prozentsatz belegt ist. Bei Verwendung dieser Abfrage ist es für den Fall, daß das vorbestimmte Ereignis vorliegt, noch möglich Daten in dem Speichermittel 205 abzuspeichern, die noch nach dem Zeitpunkt, zu dem das vorbestimmte Ereignis vorgelegen hat, generiert wurden. D.h. in diesem Fall ist beispielsweise nach einem Unfall noch eine Datenspeicherung möglich. Somit kann auch die Situation nach dem Unfall für eine gewisse Zeitdauer noch dokumentiert werden.

Anschließend an den Schritt 306 wird ein Schritt 307 ausgeführt. In dem Schritt 307 wird abgefragt, ob ein Reset für das Speichermittel 205 durchgeführt wurde, d.h. ob die Größe R11 den Wert TRUE aufweist. Wird im Schritt 307 festgestellt, daß kein Reset durchgeführt wurde, was gleichbedeutend damit ist, daß die Daten im Speichermittel 205 weiterhin gespeichert bleiben sollen, so wird erneut der Schritt 307 ausgeführt. Wird dagegen im Schritt 307 festgestellt, daß ein Reset durchgeführt wurde, was gleichbedeutend damit ist, daß die im Speichermittel 205 gespeicherten Daten gelöscht werden sollen, so wird anschließend an den Schritt 307 erneut der Schritt 302 ausgeführt.

An dieser Stelle sei erwähnt, daß es durchaus von Vorteil sein kann, wenn zwischen den Schritten 301 und 302 eine zusätzliche Abfrage, entsprechend der des Schrittes 307, eingefügt wird.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

## Patentansprüche

1. Vorrichtung (101) zur Beeinflussung wenigstens einer ersten Fahrzeuggröße, die eine erste Fahrzeugbewegung oder ein erstes Fahrzeugverhalten beschreibt, wobei die Vorrichtung Mittel (203) zur Fehlererkennung oder Funktionsüberwachung enthält, die ein Speichermittel (205) aufweisen, in dem erste Daten, die in den Mitteln (203) zur Fehlererkennung oder Funktionsüberwachung erzeugt werden, gespeichert werden, wobei das Fahrzeug weitere Vorrichtungen (105, 109) enthält, mit denen zumindest weitere Fahrzeuggrößen beeinflußbar sind,
dadurch gekennzeichnet,
daß in dem Speichermittel (205) ferner zweite Daten (S14, S17), die jeweils zu früheren Zeitpunkten vorliegen, fortlaufend gespeichert werden und dann, wenn eine vorgegebene Bedingung erfüllt ist, sukzessive durch zweite Daten, die jeweils zu späteren Zeitpunkten vorliegen, überschrieben werden, wobei bei Eintreten eines vorbestimmten Ereignisses die im Speichermittel gespeicherten zweiten Daten fest abgespeichert werden,
wobei es sich bei den zweiten Daten um erste Eingangsgrößen (E1) handelt, die der Vorrichtung zur Beeinflussung der ersten Fahrzeuggröße zugeführt werden und/oder uni zweite Eingangsgrößen (E2, En) handelt, die einer der weiteren Vorrichtungen zugeführt werden, oder um erste Größen (S17) handelt, die in der Vorrichtung zur Beeinflussung der ersten Fahrzeuggröße im Rahmen der Beeinflussung der ersten Fahrzeuggröße ermittelt werden und/oder um zweite Größen (S57, S97) handelt, die in einer der weiteren Vorrichtungen im Rahmen der Beeinflussung der jeweiligen Fahrzeuggröße ermittelt werden.

2. Vorrichtung nach Anspruch 1, dadurch gekennzeichnet, daß es sich bei der Vorrichtung zur Beeinflussung der ersten Fahrzeuggröße um eine Vorrichtung zur Regelung einer die Gierrate eines Fahrzeuges beschreibenden Größe handelt, insbesondere handelt es sich bei den ersten Eingangsgrößen um eine die Querbeschleunigung des Fahrzeuges beschreibende Größe und/oder um eine den am Fahrzeug eingestellten Lenkwinkel beschreibende Größe und/oder um eine die Gierrate des Fahrzeuges beschreibende Größe und/oder um eine den vom Fahrer eingestellten Vordruck beschreibende Größe und/oder um Größen, die die Raddrehzahlen der einzelnen Räder beschreiben.

3. Vorrichtung nach Anspruch 1, dadurch gekennzeichnet, daß es sich bei der Vorrichtung zur Beeinflussung einer ersten Fahrzeuggröße um eine Bremsschlupfregelung oder um eine Antriebsschlupfregelung handelt, mit der der Bremsschlupf oder der Antriebsschlupf beeinflußt wird, insbesondere handelt es sich bei den ersten Eingangsgrößen um Größen, die die Raddrehzahlen der einzelnen Räder beschreiben.

4. Vorrichtung nach Anspruch 1, dadurch gekennzeichnet, daß die vorgegebene Bedingung erfüllt ist, wenn der Speicherplatz des Speichermittels vollständig oder zu einem gewissen Prozentsatz belegt ist.

5. Vorrichtung nach Anspruch 1, dadurch gekennzeichnet daß die Vorrichtung ein Ausgabemittel (204) enthält, mit dem die im Speichermittel enthaltenen Daten an ein externes Auswertemittel übertragen werden.

6. Vorrichtung nach Anspruch 1, dadurch gekennzeichnet, daß es sich bei dem Ereignis um einen Unfall oder uni einen Stillstand des Fahrzeuges handelt.

7. Vorrichtung nach Anspruch 1, dadurch gekennzeichnet, daß daß in dem Speichermittel auch Daten abgespeichert werden, die die Betriebsdauer einzelner Vorrichtungen oder einzelner Komponenten beschreiben.

8. Vorrichtung nach Anspruch 1, dadurch gekennzeichnet, daß es sich bei den weiteren Vorrichtungen um eine Getriebesteuerung und/oder um eine Geschwindigkeitsregelvorrichtung und/oder um eine Abstandsregelvorrichtung und/oder um Rückhaltesysteme und/oder um eine Motorsteuerung und/oder um eine Fahrwerkregelung und/oder um eine Lenkvorrichtung handelt.

9. Vorrichtung nach Anspruch 1, dadurch gekennzeichnet, daß auch die ersten Daten, die jeweils zu früheren Zeitpunkten vorliegen, fortlaufend gespeichert werden und dann, wenn eine vorgegebene Bedingung erfüllt ist, sukzessive durch erste Daten, die jeweils zu späteren Zeitpunkten vorliegen, überschrieben werden, wobei bei Eintreten des vorbestimmten Ereignisses die im Speichermittel gespeicherten ersten Daten fest abgespeichert werden.
